# EUROPEAN PATENT SPECIFICATION

(11) **EP 4 361 968 B1**
(45) Date of publication and mention of the grant of the patent: **01.04.2026**
(21) Application number: 22204515.5
(22) Date of filing: 28.10.2022
(51) Int. Cl.: G06V 20/59, G06V 20/54

(54) **METHOD FOR DETECTING THAT A DRIVER OF A VEHICLE IS USING A HANDHELD ELECTRONIC DEVICE, METHOD FOR CONTROLLING A LEADING VEHICLE, DATA PROCESSING APPARATUS, COMPUTER PROGRAM, COMPUTER-READABLE STORAGE MEDIUM, AND SYSTEM FOR DETECTING THAT A DRIVER OF A FOLLOWING VEHICLE IS USING A HANDHELD ELECTRONIC DEVICE**
VERFAHREN ZUM ERKENNEN EINES FAHRZEUGFÜHRERS MIT EINEM HANDGEFÜHRTEN FAHRZEUG
PROCÉDÉ DE DÉTECTION D'UN CONDUCTEUR D'UN VÉHICULE

(43) Date of publication of application: 01.05.2024
(73) Proprietor: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(56) References cited:
- US-A1- 2015 054 639
- ARTAN YUSUF ET AL: "Driver Cell Phone Usage Detection from HOV/HOT NIR Images", 2014 IEEE CONFERENCE ON COMPUTER VISION AND PATTERN RECOGNITION WORKSHOPS, IEEE, 23 June 2014 (2014-06-23), pages 225 - 230, XP032649710, DOI: 10.1109/CVPRW.2014.42
- BALABID AMAL ET AL: "Cell phone usage detection in roadway images: from plate recognition to violation classification", 27 October 2022 (2022-10-27), XP093034925, Retrieved from the Internet <URL:https://link.springer.com/content/pdf/10.1007/s00521-022-07943-6.pdf?pdf=button> [retrieved on 20230327], DOI: 10.1007/s00521-022-07943-6(
- LI WANLI ET AL: "A survey on vision-based driver distraction analysis", JOURNAL OF SYSTEMS ARCHITECTURE, 1 December 2021 (2021-12-01) - 11 October 2024 (2024-10-11), NL, pages 1 - 19, XP093185443, ISSN: 1383-7621, Retrieved from the Internet <URL:https://www.sciencedirect.com/science/article/pii/S1383762121002174?ref=pdf_download&fr=RR-2&rr=8a22cf86691566bc> [retrieved on 20241011], DOI: 10.1016/j.sysarc.2021.102319

## Description

The present disclosure relates to a method for detecting that a driver of a vehicle is using a handheld electronic device.

The present disclosure is further directed to a method for controlling a leading vehicle travelling in front of a following vehicle.

Additionally, the present disclosure relates to a data processing apparatus comprising means for carrying out at least one of the above methods.

Furthermore, the present disclosure relates to a computer program and a computer-readable storage medium.

Moreover, the method relates to a system for detecting that a driver of a following vehicle is using a handheld electronic device.

Using a handheld electronic device while driving a vehicle presents a severe distraction of the driver and, thus, presents a risk to road safety.

In this context, the handheld electronic device may be a smart phone or a tablet computer. The use of the handheld electronic device may comprise texting or otherwise manipulating the handheld electronic device.

The conference paper "Driver Cell Phone Usage Detection from HOV/ HOT NIR Images" by ARTAN YUSUF ET AL, for example discloses a computer vision based method for determining driver cell phone usage using a near infrared camera system directed at the vehicle's front windshield. The developed method consists of two stages; first, a localization of the driver's face region within the front windshield image using the deformable part model. Second, a utilization of a local aggregation based image classification technique to classify a region of interest around the drivers face to detect the cell phone usage. Two classification architectures by using full face and half face images for classification are proposed.

A distraction of a driver not only affects the driver himself or herself but also other traffic participants in his or her environment. Therefore, it is an objective of the present disclosure to provide a solution to reliably detect that a driver of a vehicle is using a handheld electronic device. Thereby, road safety shall be increased.

The problem is at least partially solved or alleviated by the subject matter of the independent claims of the present disclosure, wherein further examples are incorporated in the dependent claims.

According to a first aspect, there is provided a method for detecting that a driver of a vehicle is using a handheld electronic device. The method comprises:
- capturing or receiving at least one image of the vehicle showing at least a partial frontal view of the vehicle including the driver,
- determining a face orientation of the driver based on the at least one captured image,
- determining whether at least one pupil of the driver is shown in the at least one captured image,
- inferring that the driver is using the handheld electronic device
   if the face orientation is downwards and no pupil of the driver is shown in the at least one captured image or
   if the face orientation is straight ahead and no pupil of the driver is shown in the at least one captured image.

Thus, inferring that the driver is using the handheld electronic device requires two conditions which need to be fulfilled simultaneously. The first condition is related to the face orientation and the second condition is related to the pupils of the driver. This has the effect that the determination whether the driver is using a handheld electronic device is performed with high reliability. Just considering one of the above-mentioned conditions for inferring that the driver is using the handheld electronic device may lead to an erroneous detection that the drivers using the handheld electronic device. In a case in which the face orientation is determined to be other than downwards or straight ahead, the method is abandoned. For example, a driver may look to the right or to the left in order to look into one of the rearview mirrors. The driver may also look upwards in order to look into the central rearview mirror. The method is as well abandoned if at least one pupil of the driver is detected in the captured image. Detecting that the driver of a vehicle is using a handheld electronic device offers the opportunity to react thereto, e.g. by triggering an appropriate driving maneuver and/or a warning activity being directed to at least one of the involved traffic participants including the driver using the handheld electronic device.

The handheld electronic device may be a smart phone or cell phone or a tablet computer.

In an example, the method for detecting that the driver of a vehicle is using a handheld electronic device is performed on a leading vehicle. In this example, the vehicle which is driven by the driver who, at the same time, uses a handheld electronic device is a following vehicle. The following vehicle is driving behind the leading vehicle.

In such an example, the image may be captured by or received from a rear-facing camera of the leading vehicle travelling in front of a following vehicle. Such a camera is well suitable for capturing an image showing at least a partial frontal view of the following vehicle including the driver.

It is noted that the present method may be applied in both autonomous and non-autonomous vehicles. Both of these types of vehicles may be affected by a driver of another vehicle being distracted because of the use of a handheld electronic device.

In an example, the method may comprise determining whether the driver is wearing glasses. This may be done based on the at least one captured image. In a case in which the driver is found to wear glasses, a different method for detecting the driver's pupil may be used as compared to a situation in which the driver is detected not to wear glasses.

In an example, the method further comprises:
- determining at least one of a first time period for which the face orientation is downwards or straight ahead and a second time period for which no pupil of the driver is shown in the at least one captured image, and
- inferring that the driver is using the handheld electronic device under the condition that at least one of the first time period or the second time period exceeds a predefined time threshold.

In simplified words, time periods are assessed for which the face orientation is downwards or straight ahead and for which no pupil of the driver is shown respectively. By comparing the assessed time periods with the predefined time threshold it is assessed whether the above-mentioned face orientation or state of the pupil lasts long enough such that on may infer that the driver is using the handheld electronic device. Said otherwise, if the driver is just blinking his or her eyes or orienting his or her face straight ahead or downwards for a time period that is shorter than the predefined time threshold, it is not inferred that the driver is using a handheld electronic device. Consequently, the use of a handheld electronic device is determined with high reliability. False-positive determinations are excluded or at least reduced.

In an example, the method further comprises
- counting at least one of a first number of determinations that the face orientation is downwards or straight ahead and a second number of determinations that no pupil of the driver is shown in the at least one captured image during a predefined observation time span, and
- inferring that the driver is using the handheld electronic device under the condition that at least one of the first number or the second number exceeds a predefined number threshold.

In other words, it is determined whether the driver repeatedly orients his or her face downwards or straight ahead and if the pupils of the driver repeatedly are not detectable. If this is the case, it is inferred that the driver is using the handheld electronic device wherein the driver is looking onto the handheld electronic device and onto the road ahead of the vehicle in an alternating manner. Thus, the use of the handheld electronic device may be detected with high reliability also in cases in which the driver looks onto the handheld electronic device in an intermittent manner.

In an example, the method further comprises determining whether the vehicle is an autonomous vehicle or a non-autonomous vehicle based on the captured at least one image. In a case in which the vehicle, i.e. the vehicle in which the driver is sitting who is potentially using the handheld electronic device, is determined to be an autonomous vehicle, the method is abandoned. In such a case it is considered to be allowable for the driver to use the handheld electronic device. Otherwise, i.e. if the vehicle is determined to be a non-autonomous vehicle, the method is continued since in such a case the driver must concentrate on the road and not on the handheld electronic device.

In an example, determining whether the vehicle is an autonomous vehicle or a non-autonomous vehicle comprises detecting a vehicle identification feature in the at least one captured image. The identification feature is for example an alphanumeric string of a license plate. For this example it is assumed that autonomous and non-autonomous vehicle may be distinguished by their respective identification features, e.g. alphanumeric strings of the license plates. Consequently, the fact whether a vehicle is an autonomous vehicle or a non-autonomous vehicle may be quickly and reliably determined.

In an example, the method further comprises detecting an autonomy indicator of the detected vehicle identification feature. An autonomy indicator may be a specific alphanumeric sign, e.g. letter or number or combination thereof, which is only used for autonomous vehicles or only for non-autonomous vehicles. In such cases autonomous and non-autonomous vehicles may be distinguished in a simple and reliable manner.

In an example, the method further comprises requesting an autonomy information describing whether the vehicle is an autonomous vehicle or a non-autonomous vehicle from a database, wherein requesting the autonomy information comprises providing the detected vehicle identification feature to the database. The identification feature may be an alphanumeric string of a license plate. In this example, the identification feature is captured, but the entity executing the present method is not able to determine whether the identification feature relates to an autonomous vehicle or a non-autonomous vehicle. However, another entity, e.g. a central database or cloud service, may be able to do so. The autonomy information is thus requested from this other entity. In response to the request for the autonomy information, the other entity, e.g. the central database or cloud service, returns an information whether the vehicle is autonomous or non-autonomous.

In an example, determining a face orientation of the driver comprises at least one of:
- detecting the driver in the at least one captured image,
- detecting a head of the driver in the at least one captured image or
- detecting a face of the driver in the at least one captured image.

Thus, the determination of the face orientation of the driver may be performed in several sub-steps. One sub-step may comprise detecting the driver as a whole. Another sub-step may comprise detecting the head of the driver. It is noted that the head of the driver may be detected directly or after the driver as a whole has been detected. Another sub-step may comprise detecting the face of the driver. It is noted that the face of the driver may be detected after at least one of the driver as a whole and the head of the driver has been detected. Alternatively, the face of the driver may be detected after the head of the driver has been detected directly. In a further alternative, the face of the driver may be detected without any prior sub-steps, i.e. directly. In all of the above-mentioned alternatives, the face orientation of the driver may be determined in a computationally efficient manner and with high reliability.

In an example, the method further comprises detecting whether the vehicle is moving. If the vehicle is not moving, there is no elevated risk resulting from the fact that the driver is using the handheld electronic device. In this case the method may be abandoned. Otherwise, i.e. if the vehicle is determined to be moving, the method is continued. In this context, moving is to be considered in absolute terms, i.e. not relative to a leading vehicle potentially executing the present method. Using this feature, the accuracy of the determination whether the driver is using the handheld electronic device is further increased.

In an example, the method further comprises detecting steering corrections being performed by the vehicle by comparing a lateral position of the vehicle in at least two captured images. In more detail, at least two images need to have been captured at different points in time. Of course, also more than two images may be used. The lateral positions of the vehicle within these images are compared. In a case in which the lateral positions are varying, a distraction of the driver is inferred. This may be considered as a confirmation that the driver is using the handheld electronic device. Thus, it may be determined that the driver is using the handheld electronic device under the additional condition that steering corrections are detected. This further increases the reliability of detection.

According to a second aspect, there is provided a method for controlling a leading vehicle travelling in front of a following vehicle. The method comprises:
- detecting that the driver of the following vehicle is using a handheld electronic device by performing the method according to the present disclosure, and
- triggering at least one of a reaction driving maneuver of the leading vehicle or a warning message.

As has already been explained before, using the method for detecting the use of a handheld electronic device provides an information of high reliability relating to the fact whether the driver of the following vehicle is using a handheld electronic device. Based thereon, an appropriate reaction driving maneuver may be triggered. Consequently, the danger or safety risk resulting from the use of the handheld electronic device is reliably reduced. Additionally or alternatively, a warning message may be triggered. The warning message informs the driver of the leading vehicle about the fact that the driver of the following vehicle is using a handheld electronic device. Consequently, the driver of the leading vehicle may at least increase his or her awareness while driving. Also, using this measure reduces or eliminates the safety risk or danger.

In an example, the reaction maneuver may comprise a lane change maneuver. Alternatively, the leading vehicle may let pass the following vehicle. In a further alternative, a safety distance which the leading vehicle keeps with respect to the following vehicle may be increased.

In an example, the warning message may be triggered to be shown in an instrument panel of the leading vehicle. Consequently, the warning message may be easily spotted by the driver of the leading vehicle.

It is noted that a warning activity may also be directed to the driver of the following vehicle and/or to other traffic participants. In the first case, the purpose of the warning message is to make the driver stop using the handheld electronic device. In the second case, the purpose of the warning message is to inform the other traffic participants which may then increase their awareness and/or perform an appropriate driving maneuver.

According to a third aspect, there is provided a data processing apparatus comprising means for carrying out at least one of the methods of the present disclosure. Thus, the data processing apparatus may comprise means for carrying out the method for detecting that a driver of a vehicle is using a handheld electronic device or means for carrying out the method for controlling a leading vehicle travelling in front of a following vehicle or means for carrying out both the method for detecting that a driver of a vehicle is using a handheld electronic device and the method for controlling a leading vehicle travelling in front of a following vehicle. Using such a data processing apparatus, a driver of a vehicle using a handheld electronic device may be reliably detected. This offers the opportunity to react thereto, e.g. by triggering an appropriate driving maneuver and/or a warning activity being directed to at least one of the involved traffic participants including the driver using the handheld electronic device.

According to a fourth aspect, there is provided a computer program comprising instructions which, when the computer program is executed by a computer, cause the computer to carry out at least one of the methods of the present disclosure. Thus, the computer program may comprise instructions for causing the computer to carry out the method for detecting that a driver of a vehicle is using a handheld electronic device or instructions for causing the computer to carry out the method for controlling a leading vehicle travelling in front of a following vehicle or instructions for causing the computer to carry out both the method for detecting that a driver of a vehicle is using a handheld electronic device and the method for controlling a leading vehicle travelling in front of a following vehicle. Using such a computer program, a driver of a vehicle using a handheld electronic device is reliably detected. Based thereon, other traffic participants may react thereto, e.g. by triggering an appropriate driving maneuver and/or a warning activity being directed to at least one of the involved traffic participants including the driver using the handheld electronic device.

According to a fifth aspect, there is provided a computer-readable storage medium comprising instructions which, when executed by a computer, cause the computer to carry out at least one of the methods of the present disclosure. Thus, the computer-readable storage medium may comprise instructions for causing the computer to carry out the method for detecting that a driver of a vehicle is using a handheld electronic device or instructions for causing the computer to carry out the method for controlling a leading vehicle travelling in front of a following vehicle or instructions for causing the computer to carry out out both the method for detecting that a driver of a vehicle is using a handheld electronic device and the method for controlling a leading vehicle travelling in front of a following vehicle. Detecting that the driver of a vehicle is using a handheld electronic device offers the opportunity to react thereto, e.g. by triggering an appropriate driving maneuver and/or a warning activity being directed to at least one of the involved traffic participants including the driver using the handheld electronic device.

According to a sixth aspect, there is provided a system for detecting that a driver of a following vehicle is using a handheld electronic device. The system comprises a camera unit being configured to be mounted on a leading vehicle in a rearward-facing manner, and a data processing apparatus according to the present disclosure. The camera unit and the data processing apparatus are communicatively connected. Thus, a driver of a vehicle using a handheld electronic device may be detected with high reliability. This offers the opportunity to react thereto, e.g. by triggering an appropriate driving maneuver and/or a warning activity being directed to at least one of the involved traffic participants including the driver using the handheld electronic device.

The methods of the present disclosure may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.

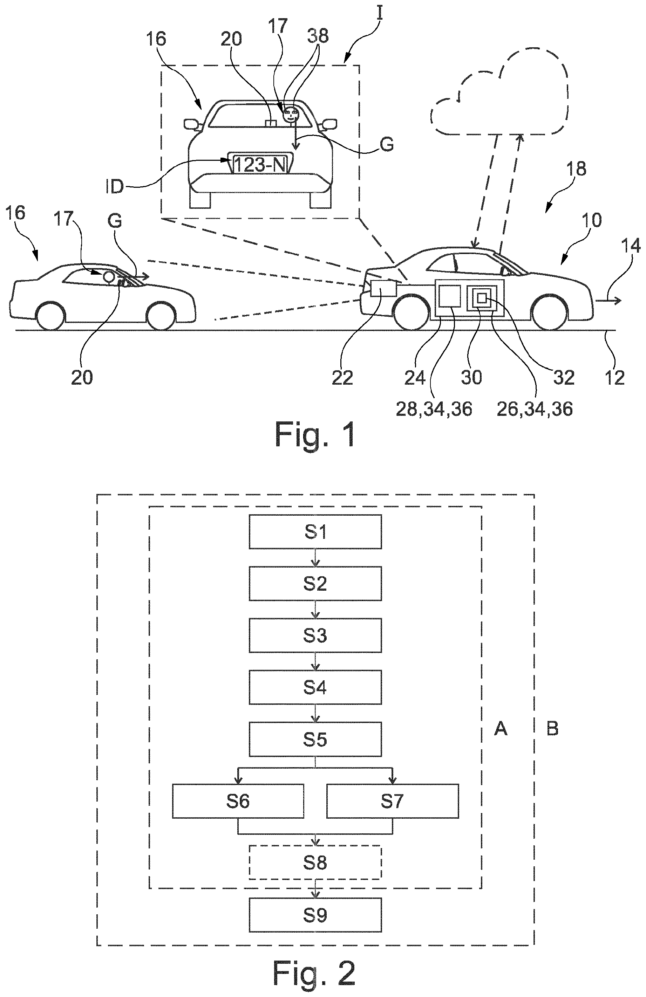

- Figure 1: shows a traffic situation comprising a leading vehicle and a following vehicle, wherein the leading vehicle is equipped with a system according to the present disclosure for detecting that a driver of the following vehicle is using a handheld electronic device, the system comprising a data processing apparatus according to the present disclosure, a computer-readable storage medium according to the present disclosure, and a computer program according to the present disclosure, wherein a method for controlling the leading vehicle and a method for detecting that the driver of the following vehicle is using a handheld electronic device is performed on the data processing apparatus, and
- Figure 2: illustrates steps of the method for controlling the leading vehicle and the method for detecting that the driver of the following vehicle is using a handheld electronic device.

The Figures are merely schematic representations and serve only to illustrate examples of the disclosure. Identical or equivalent elements are in principle provided with the same reference signs.

Figure 1 shows a traffic situation, wherein a first or leading vehicle 10 is driving on a road 12 in a travelling direction 14. Another vehicle 16 is driving behind the leading vehicle 10. The vehicle 16 will also be called a following vehicle 16. In the present context, the leading vehicle 10 is an autonomous vehicle and the following vehicle 16 is a non-autonomous vehicle.

A driver 17 of the following vehicle 16 is using a handheld electronic device 20.

The leading vehicle 10 is equipped with a system 18 for detecting that a driver of the following vehicle 16 is using the handheld electronic device 20.

The system 18 comprises a camera unit 22 being mounted on the leading vehicle 10 in a rearward-facing manner.

Additionally, the system 18 comprises a data processing apparatus 24 being installed in the leading vehicle 10.

The camera unit 22 and the data processing apparatus 24 are communicatively connected.

The data processing apparatus 24 comprises a data storage unit 26 and a data processing unit 28.

The data storage unit 26 comprises a computer readable storage medium 30 on which there is provided a computer program 32.

The computer program 32 and the computer-readable storage medium 30 comprise instructions which, when executed by the data processing unit 28 or, more generally speaking, a computer, cause the data processing unit 28 or the computer to carry out a method for controlling the leading vehicle 10 traveling in front of the following vehicle 16.

Consequently, the data storage unit 26 and the data processing unit 28 may also be designated as means 34 for carrying out the method for controlling a leading vehicle traveling in front of a following vehicle.

Steps of the method for controlling a leading vehicle traveling in front of the following vehicle are illustrated in Figure 2.

The method comprises detecting that the driver 17 of the following vehicle 16 is using the handheld electronic device 20. This is done by performing a method for detecting that a driver of a vehicle is using a handheld electronic device.

Consequently, the data storage unit 26 and a data processing unit 28 may also be designated as means 36 for carrying out a method for detecting that a driver of a vehicle is using a handheld electronic device.

In the following, steps of the method for controlling the leading vehicle and steps of the method for detecting that a driver of the vehicle is using a handheld electronic device will be designated with Sx. The steps specifically belonging to the method for detecting that a driver of the vehicle is using a handheld electronic device are arranged in rectangle A. Steps belonging to the method for controlling the vehicle are arranged in rectangle B.

A first step S1 comprises capturing at least one image I of the vehicle, i.e. of the following vehicle 16 using the camera unit 22. The at least one image I is then received at the data processing apparatus 24. The at least one image I shows at least a partial frontal view of the following vehicle 16 including the driver 17.

In the present example, a stream of images I is received at the data processing apparatus 24. It is noted that in Figure 1 just one exemplary image I is illustrated.

In a second step S2, based on the received images I, may be detected whether the following vehicle 16 is moving. This may be done by comparing the size of a representation of the following vehicle 16 or a part thereof in the received images I. If the size is varying, a relative movement between the leading vehicle 10 and the following vehicle 16 may be inferred. If additionally, the traveling speed of the leading vehicle 10 is known, one may determine in absolute terms whether the following vehicle 16 is moving. If it is found that the following vehicle 16 is not moving, the method is abandoned. Otherwise, the method is continued.

Thereafter, in a third step S3, it is determined whether the following vehicle 16 is an autonomous vehicle or a non-autonomous vehicle. This is done based on the captured images I.

In the present example, a vehicle identification feature ID is detected in the captured images I. The vehicle identification feature ID may be an alphanumeric string of a license plate. In the present example, the alphanumeric string is 123-N.

For the present example, it may be assumed that license plates for autonomous vehicles are different from license plates for non-autonomous vehicles. Consequently, an autonomy indicator, in the present example the letter N, of the detected vehicle identification feature ID may be detected. If the following vehicle 16 is classified as an autonomous vehicle, the method is abandoned since it is not dangerous for a driver of an autonomous vehicle to use a handheld electronic device. Otherwise, i.e. if the following vehicle 16 is classified as a non-autonomous vehicle, the method is continued.

In the present example, the autonomy indicator N relates to a non-autonomous vehicle. Thus, it is determined that the following vehicle 16 is a non-autonomous vehicle.

It is noted that the present method may also be adapted to situations in which the vehicle identification feature ID does not comprise an autonomy indicator. This may be the case in a situation in which license plates for autonomous and non-autonomous vehicles generally are the same. However, each license plate needs to be individual. In such a case, an autonomy information may be requested from a database, e.g. a central registration database. Requesting this information may comprise providing the detected vehicle identification feature ID to the database. The database will then return the autonomy information for the provided identification feature. This alternative is illustrated in Figure 1 by a cloud symbol and two arrows extending between the cloud symbol and the data processing apparatus 24.

Thereafter, in a fourth step S4, a face orientation of the driver 17 of the following vehicle 16 may be determined based on the captured images I. In Figure 1, the face orientation is represented by arrow G. In a simplified manner, the face orientation can be imagined as the direction into which the tip of the driver's nose is pointing.

Determining the face orientation of the driver 17 may comprise several sub-steps. In the present example, the driver 17 as such is detected in the captured images I in a first sub-step.

In a second sub-step, based on the first sub-step, the head of the driver 17 is detected. Thereafter, in a third sub-step, the face of the driver 17 is detected based on the result of the second sub-step.

Once the face of the driver 17 is detected, the face orientation G of the driver 17 is determined. To this end, algorithms may be used which are known as such.

If the face orientation G of the driver 17 is downwards or straight ahead, the method is continued. Otherwise, the method is abandoned.

In the present example, the face orientation G is assumed to be downwards. Thus, the method is continued and in a fifth step S5, it is determined whether at least one pupil 38 of the driver 17 is shown in the captured images I.

In the present example, it is assumed that no pupil 38 of the driver 17 is shown in the captured image I is because the driver 17 is looking downwards on the handheld electronic device 20 which he or she is using.

Thereafter, in a sixth step S6, two timers are set.

A first timer measures the time period for which the face orientation G is downwards. A second timer is set to measure the time period for which no pupil 38 of the driver 17 is shown in the at least one captured image I.

Then, the measured time periods are compared to a predefined time threshold.

If one of the first time period or the second time period exceeds the predefined time threshold, it is inferred that the driver 17 is using the handheld electronic device 20.

A seventh step S7 may be executed in parallel or subsequently to the sixth step S6.

The seventh step S7 uses a predefined observation time span and counts a first number of determinations that the face orientation G is downward or straight ahead within the predefined observation time span. Moreover, a second number of determinations is determined by counting the determinations that no pupil 38 of the driver 17 is shown within the predefined observation time span.

In an example, the predefined observation time span may be 20 seconds and within this 20 seconds it may have been determined three times that the face orientation G is downward or straight ahead. Additionally, it may have been determined three times that no pupil 38 of the driver 17 is detectable in the received images I.

The first number of determinations and the second number of determinations then is compared to a predefined number threshold.

In a case in which one of the first number of determinations or the second number of determinations exceeds the predefined number threshold, it is inferred that the driver 17 is using the handheld electronic device 20. Such a use may be designated as an intermittent use of the handheld electronic device 20.

In an optional eighth step S8, the conclusion that the driver 17 is using the handheld electronic device 20 may be confirmed by detecting steering corrections being performed by the following vehicle 16.

Steering corrections refer to the fact that the driver 17 needs to correct his or her lateral position while driving.

This may be determined by evaluating at least two captured images I and comparing the lateral position of the vehicle 16 in these images I.

The need to perform steering corrections is an indicator that the driver 17 is inattentive. Consequently, if steering corrections are determined, the conclusion that the driver 17 is using a handheld electronic device 20 is confirmed. Otherwise, the conclusion that the driver 17 is using the handheld electronic device 20 is not confirmed.

Based on the detection that the driver 17 is using the handheld electronic device, a ninth step S9 is performed.

In the ninth step S9 at least one of a reaction driving maneuver of the leading vehicle 10 or a warning message is triggered. In the present example both a reaction driving maneuver and a warning message are triggered.

In the present example the reaction driving maneuver may relate to a maneuver that is intended to let past the following vehicle 16. In this context, the leading vehicle 10 which is an autonomous vehicle in the present case may pull to the side and slow down until the following vehicle 16 has overtaken the leading vehicle 10.

At the same time, a warning message is displayed in the inside of the leading vehicle 10 in order to inform the passengers about the reasons for the performed reaction driving maneuver.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: leading vehicle
- 12: road
- 14: travelling direction
- 16: vehicle / following vehicle
- 17: driver
- 18: system for detecting that a driver of a following vehicle is using a handheld electronic device
- 20: handheld electronic device
- 22: camera unit
- 24: data processing apparatus
- 26: data storage unit
- 28: data processing unit
- 30: computer-readable storage medium
- 32: computer program
- 34: means for carrying out a method for controlling a leading vehicle travelling in front of a following vehicle
- 36: means for carrying out the method for detecting that a driver of a vehicle is using a handheld electronic device
- 38: pupil of the driver

- A: steps of the method for detecting that a driver of a vehicle is using a handheld electronic device
- B: steps of the method for controlling a leading vehicle travelling in front of a following vehicle
- G: face orientation of the driver
- I: captured image
- ID: vehicle identification feature
- S1: first step
- S2: second step
- S3: third step
- S4: fourth step
- S5: fifth step
- S6: sixth step
- S7: seventh step
- S8: eighth step
- S9: ninth step

## Claims

1. A method for detecting that a driver (17) of a vehicle (16) is using a handheld electronic device (20), comprising:
- capturing or receiving at least one image (I) of the vehicle (16) showing at least a partial frontal view of the vehicle (16) including the driver (17) (S1),
- determining a face orientation (G) of the driver (17) based on the at least one captured image (I) (S4),
- determining whether at least one pupil (38) of the driver (17) is shown in the at least one captured image (I) (S5),
- inferring that the driver (17) is using the handheld electronic device (20) if the face orientation (G) is downwards and no pupil (38) of the driver (17) is shown in the at least one captured image (I) or
if the face orientation (G) is straight ahead and no pupil (38) of the driver (17) is shown in the at least one captured image (I).

2. The method of claim 1, further comprising
- determining at least one of a first time period for which the face orientation (G) is downwards or straight ahead and a second time period for which no pupil (38) of the driver (17) is shown in the at least one captured image (I), and
- inferring that the driver (17) is using the handheld electronic device (20) under the condition that at least one of the first time period or the second time period exceeds a predefined time threshold (S6).

3. The method of claim 1 or 2, further comprising
- counting at least one of a first number of determinations that the face orientation (G) is downwards or straight ahead and a second number of determinations that no pupil (38) of the driver (17) is shown in the at least one captured image (I) during a predefined observation time span, and
- inferring that the driver (17) is using the handheld electronic device (20) under the condition that at least one of the first number or the second number exceeds a predefined number threshold (S7).

4. The method of any one of the preceding claims, further comprising determining whether the vehicle (16) is an autonomous vehicle or a non-autonomous vehicle based on the captured at least one image (I) (S3).

5. The method of claim 4, wherein determining whether the vehicle (16) is an autonomous vehicle or a non-autonomous vehicle comprises detecting a vehicle identification feature (ID) in the at least one captured image (I).

6. The method of claim 5, further comprising detecting an autonomy indicator of the detected vehicle identification feature (ID).

7. The method of claim 5 or 6, further comprising requesting an autonomy information describing whether the vehicle (16) is an autonomous vehicle or a non-autonomous vehicle from a database, wherein requesting the autonomy information comprises providing the detected vehicle identification feature (ID) to the database.

8. The method of any one of the preceding claims, wherein determining a face orientation (G) of the driver (17) comprises at least one of:
- detecting the driver (17) in the at least one captured image (I),
- detecting a head of the driver (17) in the at least one captured image (I) or
- detecting a face of the driver (17) in the at least one captured image (I).

9. The method of any one of the preceding claims, further comprising detecting whether the vehicle (16) is moving (S2).

10. The method of any one of the preceding claims, further comprising detecting steering corrections being performed by the vehicle (16) by comparing a lateral position of the vehicle (16) in at least two captured images (I) (S8).

11. A method for controlling a leading vehicle (10) travelling in front of a following vehicle (16), comprising
- detecting that the driver (17) of the following vehicle (16) is using a handheld electronic device (20) by performing the method according to any one of the preceding claims (S1-S8), and
- triggering at least one of a reaction driving maneuver of the leading vehicle (10) or a warning message (S9).

12. A data processing apparatus (24) comprising means (34, 36) for carrying out at least one of the methods of any one of the preceding claims.

13. A computer program (32) comprising instructions which, when the computer program is executed by a computer, cause the computer to carry out at least one of the methods of claims 1 to 11.

14. A computer-readable storage medium (30) comprising instructions which, when executed by a computer, cause the computer to carry out at least one of the methods of claims 1 to 11.

15. A system (18) for detecting that a driver (17) of a following vehicle (16) is using a handheld electronic device (20), comprising a camera unit (22) being configured to be mounted on a leading vehicle (10) in a rearward-facing manner, and a data processing apparatus (24) according to claim 12, wherein the camera unit (22) and the data processing apparatus (24) are communicatively connected.

## Patentansprüche

1. Verfahren zum Detektieren, dass ein Fahrer (17) eines Fahrzeugs (16) eine in der Hand gehaltene elektronische Vorrichtung (20) verwendet, umfassend:
- Aufnehmen oder Empfangen mindestens eines Bildes (I) des Fahrzeugs (16), das mindestens eine teilweise Frontalansicht des Fahrzeugs (16) einschließlich des Fahrers (17) zeigt (S1),
- Bestimmen einer Gesichtsausrichtung (G) des Fahrers (17) auf der Grundlage des mindestens einen aufgenommenen Bildes (I) (S4),
- Bestimmen, ob mindestens eine Pupille (38) des Fahrers (17) in dem mindestens einen aufgenommenen Bild (I) gezeigt ist (S5),
- Schlussfolgern, dass der Fahrer (17) die in der Hand gehaltene elektronische Vorrichtung (20) verwendet,
wenn die Gesichtsausrichtung (G) nach unten gerichtet ist und keine Pupille (38) des Fahrers (17) in dem mindestens einen aufgenommenen Bild (I) gezeigt ist oder wenn die Gesichtsausrichtung (G) geradeaus ist und keine Pupille (38) des Fahrers (17) in dem mindestens einen aufgenommenen Bild (I) gezeigt ist.

2. Verfahren nach Anspruch 1, des Weiteren umfassend:
- Bestimmen mindestens eines von einem ersten Zeitraum, den die Gesichtsausrichtung (G) nach unten oder geradeaus gerichtet ist, und einem zweiten Zeitraum, den keine Pupille (38) des Fahrers (17) in dem mindestens einen aufgenommenen Bild (I) gezeigt ist, und
- Schlussfolgern, dass der Fahrer (17) die in der Hand gehaltene elektronische Vorrichtung (20) verwendet, unter der Bedingung, dass mindestens einer des ersten Zeitraums und des zweiten Zeitraums eine vordefinierte Zeitschwelle (S6) überschreitet.

3. Verfahren nach Anspruch 1 oder 2, des Weiteren umfassend
- Zählen, während einer vordefinierten Beobachtungszeitspanne, mindestens eines von einer ersten Anzahl von Bestimmungen, dass die Gesichtsausrichtung (G) nach unten oder geradeaus gerichtet ist, und einer zweiten Anzahl von Bestimmungen, dass keine Pupille (38) des Fahrers (17) in dem mindestens einen aufgenommenen Bild (I) gezeigt ist, und
- Schlussfolgern, dass der Fahrer (17) die in der Hand gehaltene elektronische Vorrichtung (20) benutzt, unter der Bedingung, dass mindestens eine der ersten Anzahl und der zweiten Anzahl eine vordefinierte Anzahlschwelle (S7) überschreitet.

4. Verfahren nach einem der vorangehenden Ansprüche, des Weiteren umfassend das Bestimmen, ob das Fahrzeug (16) ein autonomes Fahrzeug oder ein nicht-autonomes Fahrzeug ist, auf der Grundlage des mindestens einen aufgenommenen Bildes (I) (S3).

5. Verfahren nach Anspruch 4, wobei das Bestimmen, ob das Fahrzeug (16) ein autonomes Fahrzeug oder ein nicht-autonomes Fahrzeug ist, das Detektieren eines Fahrzeugidentifikationsmerkmals (ID) in dem mindestens einen aufgenommenen Bild (I) umfasst.

6. Verfahren nach Anspruch 5, des Weiteren umfassend das Detektieren eines Autonomieindikators des detektierten Fahrzeugidentifikationsmerkmals (ID).

7. Verfahren nach Anspruch 5 oder 6, des Weiteren umfassend das Anfordern einer Autonomieinformation, die beschreibt, ob das Fahrzeug (16) ein autonomes Fahrzeug oder ein nicht-autonomes Fahrzeug ist, aus einer Datenbank, wobei das Anfordern der Autonomieinformation das Übermitteln des detektierten Fahrzeugidentifikationsmerkmals (ID) an die Datenbank umfasst.

8. Verfahren nach einem der vorangehenden Ansprüche, wobei das Bestimmen einer Gesichtsausrichtung (G) des Fahrers (17) mindestens eines umfasst von:
- Detektieren des Fahrers (17) in dem mindestens einen aufgenommenen Bild (I),
- Detektieren eines Kopfes des Fahrers (17) in dem mindestens einen aufgenommenen Bild (I) und
- Detektieren eines Gesichts des Fahrers (17) in dem mindestens einen aufgenommenen Bild (I).

9. Verfahren nach einem der vorangehenden Ansprüche, des Weiteren umfassend das Detektieren, ob sich das Fahrzeug (16) bewegt (S2),

10. Verfahren nach einem der vorangehenden Ansprüche, des Weiteren umfassend das Detektieren von Lenkkorrekturen, die durch das Fahrzeug (16) vorgenommen werden, durch Vergleichen einer seitlichen Position des Fahrzeugs (16) in mindestens zwei aufgenommenen Bildern (I) (S8).

11. Verfahren zum Steuern eines vorausfahrenden Fahrzeugs (10), das vor einem nachfolgenden Fahrzeug (16) fährt, umfassend:
- Detektieren, dass der Fahrer (17) des nachfolgenden Fahrzeugs (16) eine in der Hand gehaltene elektronische Vorrichtung (20) verwendet, mittels Durchführen des Verfahrens nach einem der vorangehenden Ansprüche (S1-S8) und
- Auslösen mindestens eines von einem Reaktionsfahrmanöver des vorausfahrenden Fahrzeugs (10) und einer Warnmeldung (S9).

12. Datenverarbeitungsvorrichtung (24), umfassend ein Mittel (34, 36) zum Ausführen mindestens eines der Verfahren nach einem der vorangehenden Ansprüche.

13. Computerprogramm (32), umfassend Instruktionen, die, wenn das Computerprogramm durch einen Computer ausgeführt wird, den Computer veranlassen, mindestens eines der Verfahren nach den Ansprüchen 1 bis 11 auszuführen.

14. Computerlesbares Speichermedium (30), umfassend Instruktionen, die, wenn sie durch einen Computer ausgeführt werden, den Computer veranlassen, mindestens eines der Verfahren nach den Ansprüchen 1 bis 11 auszuführen.

15. System (18) zum Detektieren, dass ein Fahrer (17) eines nachfolgenden Fahrzeugs (16) eine in der Hand gehaltene elektronische Vorrichtung (20) verwendet, umfassend eine Kameraeinheit (22), die dazu eingerichtet ist, an einem vorausfahrenden Fahrzeug (10) in einer nach hinten gerichteten Weise montiert zu werden, und einer Datenverarbeitungsvorrichtung (24) nach Anspruch 12, wobei die Kameraeinheit (22) und die Datenverarbeitungsvorrichtung (24) kommunikativ verbunden sind.

## Revendications

1. Procédé destiné à détecter qu'un conducteur (17) d'un véhicule (16) utilise un appareil portatif électronique (20), comprenant de :
- capturer ou recevoir au moins une image (I) du véhicule (16) montrant au moins une vue frontale partielle du véhicule (16) incluant le conducteur (17) (S1),
- déterminer une orientation de visage (G) du conducteur (17) sur la base de ladite au moins une image capturée (I) (S4),
- déterminer si au moins une pupille (38) du conducteur (17) est montrée dans ladite au moins une image capturée (I) (S5),
- déduire que le conducteur (17) utilise l'appareil portatif électronique (20)
lorsque l'orientation de visage (G) est vers le bas et qu'aucune pupille (38) du conducteur (17) n'est montrée dans ladite au moins une image capturée (I) ou lorsque l'orientation de visage (G) est droit devant et qu'aucune pupille (38) du conducteur (17) n'est montrée dans ladite au moins une image capturée (I).

2. Procédé selon la revendication 1, comprenant en outre de :
- déterminer au moins une parmi une première période de temps pendant laquelle l'orientation de visage (G) est vers le bas ou droit devant et une seconde période de temps pendant laquelle aucune pupille (38) du conducteur (17) n'est montrée dans ladite au moins une image capturée (I), et
- déduire que le conducteur (17) utilise l'appareil portatif électronique (20) à la condition qu'au moins une parmi la première période de temps ou la seconde période de temps dépasse un seuil de temps prédéfini (S6).

3. Procédé selon la revendication 1 ou 2, comprenant en outre de :
- compter au moins un parmi un premier nombre de déterminations que l'orientation de visage (G) est vers le bas ou droit devant et un second nombre de déterminations qu'aucune pupille (38) du conducteur (17) n'est montrée dans ladite au moins une image capturée (I) pendant un intervalle de temps d'observation prédéfini, et
- déduire que le conducteur (17) utilise l'appareil portatif électronique (20) à la condition qu'au moins un parmi le premier nombre ou le second nombre dépasse un seuil de nombre prédéfini (S7).

4. Procédé selon l'une quelconque des revendications précédentes, comprenant en outre de déterminer si le véhicule (16) est un véhicule autonome ou un véhicule non autonome sur la base de ladite au moins une image capturée (I) (S3).

5. Procédé selon la revendication 4, dans lequel le fait de déterminer si le véhicule (16) est un véhicule autonome ou un véhicule non autonome comprend de détecter une caractéristique d'identification de véhicule (ID) dans ladite au moins une image capturée (I).

6. Procédé selon la revendication 5, comprenant en outre de détecter un indicateur d'autonomie de la caractéristique d'identification de véhicule détectée (ID).

7. Procédé selon la revendication 5 ou 6, comprenant en outre de demander une information d'autonomie décrivant si le véhicule (16) est un véhicule autonome ou un véhicule non autonome à partir d'une base de données, dans lequel la demande de l'information d'autonomie comprend de fournir la caractéristique d'identification de véhicule détectée (ID) à la base de données.

8. Procédé selon l'une quelconque des revendications précédentes, dans lequel la détermination d'une orientation de visage (G) du conducteur (17) comprend au moins un parmi :
- détecter le conducteur (17) dans ladite au moins une image capturée (I),
- détecter une tête du conducteur (17) dans ladite au moins une image capturée (I) ou
- détecter un visage du conducteur (17) dans ladite au moins une image capturée (I).

9. Procédé selon l'une quelconque des revendications précédentes, comprenant en outre de détecter si le véhicule (16) est en mouvement (S2).

10. Procédé selon l'une quelconque des revendications précédentes, comprenant en outre de détecter des corrections de braquage étant effectuées par le véhicule (16) en comparant une position latérale du véhicule (16) dans au moins deux images capturées (I) (S8).

11. Procédé pour commander un véhicule de tête (10) se déplaçant devant un véhicule suiveur (16), comprenant de :
- détecter que le conducteur (17) du véhicule suiveur (16) utilise un appareil portatif électronique (20) en mettant en œuvre le procédé selon l'une quelconque des revendications précédentes (S1 à S8), et
- déclencher au moins un parmi une manœuvre de conduite de réaction du véhicule de tête (10) ou un message d'avertissement (S9).

12. Dispositif de traitement de données (24) comprenant des moyens (34, 36) pour mettre en œuvre au moins l'un des procédés selon l'une quelconque des revendications précédentes.

13. Programme informatique (32) comprenant des instructions qui, lorsque le programme informatique est exécuté par un ordinateur, amènent l'ordinateur à mettre en œuvre au moins l'un des procédés des revendications 1 à 11.

14. Support de stockage lisible par ordinateur (30) comprenant des instructions qui, lorsqu'elles sont exécutées par un ordinateur, amènent l'ordinateur à mettre en œuvre au moins l'un des procédés des revendications 1 à 11.

15. Système (18) pour détecter qu'un conducteur (17) d'un véhicule suiveur (16) utilise un appareil portatif électronique (20), comprenant une unité de caméra (22) configurée pour être montée sur un véhicule de tête (10) d'une manière dirigée vers l'arrière, et un dispositif de traitement de données (24) selon la revendication 12, dans lequel l'unité de caméra (22) et le dispositif de traitement de données (24) sont reliés en communication.
